# EUROPEAN PATENT APPLICATION

(11) **EP 2 424 003 A1**
(43) Date of publication of application: **29.02.2012**
(21) Application number: 11177335.4
(22) Date of filing: 11.08.2011
(51) Int. Cl.: H01M 2/12

(54) **Vented battery pack**

(30) Priority: 23.08.2010 US 861308
(71) Applicant: Delphi Technologies, Inc., Troy, MI 48007 (US)
(72) Inventor: Kruger, Duane D., Westfield, IN Indiana 46074-8812 (US)
(74) Representative: Robert, Vincent

(57) **Abstract**

A lithium battery (32) includes a lithium cell package (12) disposed within an enclosure (20, 22; 120, 122) having means (28, 30; 128, 130) to route gases vented from the package (12) in a controlled fashion. A plurality of enclosures (20, 22; 120, 122) may be stacked, defining a vent conduit (34) for collecting and routing gases vented from any of the plurality of enclosures (20, 22; 120, 122). Means (38) for interfacing a gas conveyance means (40) to the vent conduit (34) are provided. In a further aspect, the enclosure (20, 22; 120, 122) may include features (132, 134) to control the location in the cell package (12) at which vented gases are released.

## Description

### TECHNICAL FIELD

The present invention relates to a battery pack with venting provisions for routing of gases that may be produced internal to the battery pack.

### BACKGROUND OF THE INVENTION

Automobile manufacturers are interested in Plug-in Hybrid Electric Vehicles (PHEV) using lithium batteries. A requirement for lithium batteries is that the active material must be isolated from oxygen. This requirement may be met by a metalized barrier surrounding the active lithium cell, such as by encasing the cell in a hard metal case or by providing a metalized film package to surround the cell. Examples of cell packaging are found in U.S. Patent Publication 2006/0234119 and U. S. Patent Publication 2010/0143782, both of which are incorporated by reference.

Under certain conditions, cells may generate gases, resulting in a pressurized condition within the cell package. When the pressure exceeds the strength of the package, the package may rupture or explode, releasing the gas to the exterior of the cell. Gases generated in lithium cells may be noxious or harmful. This limits flexibility in positioning lithium cells in a vehicle to locations that will not expose people to any vented gases from the battery, in particular to locations outside of the passenger compartment of the vehicle.

### BRIEF SUMMARY OF THE INVENTION

In a lithium battery embodying principles of the invention, a cell package is disposed within an enclosure having means to route gases vented from the package to the exterior of the enclosure in a controlled fashion. In this way, the battery may be mounted, for example, in proximity with the passenger compartment of the vehicle without concern of exposing passengers to noxious gases discharged from a ruptured cell package.

In another aspect of the invention, the location in the cell package where venting will occur in the event of pressure within the cell exceeding the burst strength of the cell package is controlled by the enclosure within which the cell package is disposed. As a result, for example, venting may be controlled to occur near the top of the cell package so as to allow the relief of gas pressure while retaining liquids within the cell package.

According to an advantageous embodiment of the invention, it is provided a battery pack comprising:
a plurality of battery cell modules arranged in a lineal stack, each battery cell module including at least one electrochemical cell disposed in a cell frame, or enclosure,
wherein the cell frame defines a vent opening and a chamber in fluid communication with the vent opening, the chamber sealed such that fluid communication between the chamber and the exterior of the frame can only occur through the vent opening,
wherein when the cell modules are lineally arranged the vent openings of individual cell frames cooperate to define a vent conduit;
an interface means disposed at a first end of the lineal stack defining an opening in fluid communication with the vent conduit, said interface means adapted to attach to a gas conveyance means.

### BRIEF DESCRIPTION OF THE DRAWINGS

Fig. 1 depicts an exploded view of a cell module embodying principles of the present invention;

Fig. 2 depicts an assembled cell module embodying principles of the present invention;

Fig. 3 depicts a plurality of cell modules partially arranged in a battery embodying principles of the present invention;

Fig. 4 depicts a battery pack embodying principles of the present invention;

Fig. 5 depicts an alternative cell enclosure embodying principles of the present invention, configured to control where cell venting will occur; and

Fig. 6 depicts regions on a battery cell defined by the enclosure of Fig. 5, embodying principles of the present invention.

### DESCRIPTION OF PREFERRED EMBODIMENT

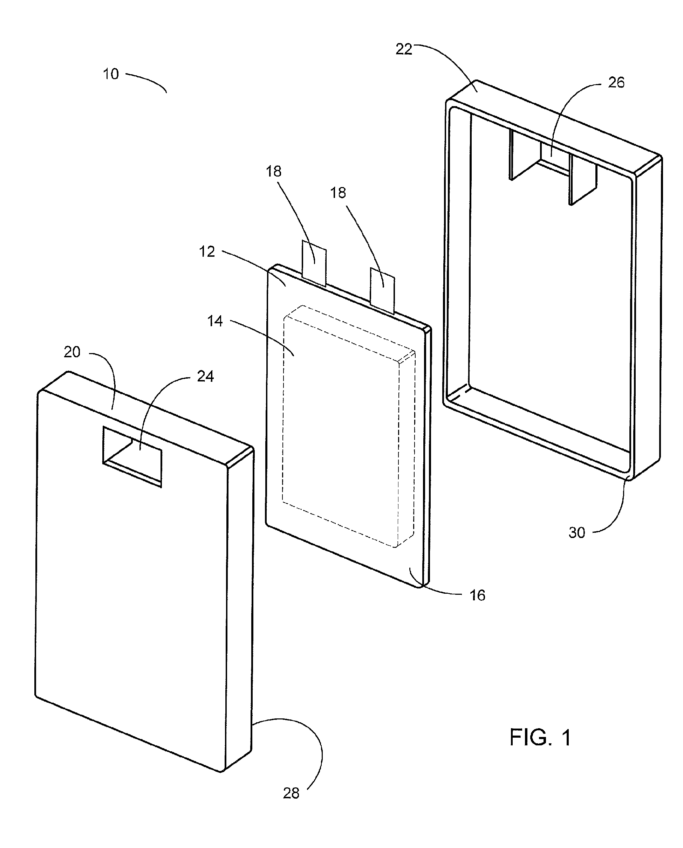

Referring to Fig. 1, a cell module 10 comprises a cell package 12. As used herein, the term "cell package" includes an electrochemical cell 14 and packaging material, such as for example metalized film 16, surrounding the electrochemical cell 14 to isolate the electrochemical cell 14 from contact with air and to allow handling of the packaged cell. The electrochemical cell 14 may be, for example, a lithium cell as is known in the art. Metalized film 16 is disposed around the electrochemical cell 14, and is sealed in a region surrounding the electrochemical cell 14. The seal may be achieved, for example, by a fold in the film 16, a heat seal joining a front layer of the metalized film 16 to a rear layer of the metalized film 16, by combinations of folds and heat seals, or by other means as known in the art. The cell package 12 also includes terminals 18 to provide electrical communication from the electrochemical cell 14 to the exterior of the cell package 12.

As depicted in Fig. 1, the cell module 10 further comprises a first enclosure portion 20, and a second enclosure portion 22. In the depiction, the first enclosure portion 20 defines a first vent opening 24, and the second enclosure portion 22 defines a second vent opening 26. As depicted, the first enclosure portion 20 includes a first sealing surface 28, and the second enclosure portion 22 includes a second sealing surface 30. While Fig. 1 depicts the first sealing surface 28 and the second sealing surface 30 as planar surfaces, either of the sealing surfaces 28, 30 may define a recess into which a sealing means such as a gasket or a sealant material may be disposed. Alternately, the sealing surfaces 28, 30 may cooperate when abutted to one another to define a recess into which a sealing means such as a gasket or a sealant material may be disposed. The enclosure portions 20 and 22 may be structurally identical to each other, which may allow manufacturing efficiency.

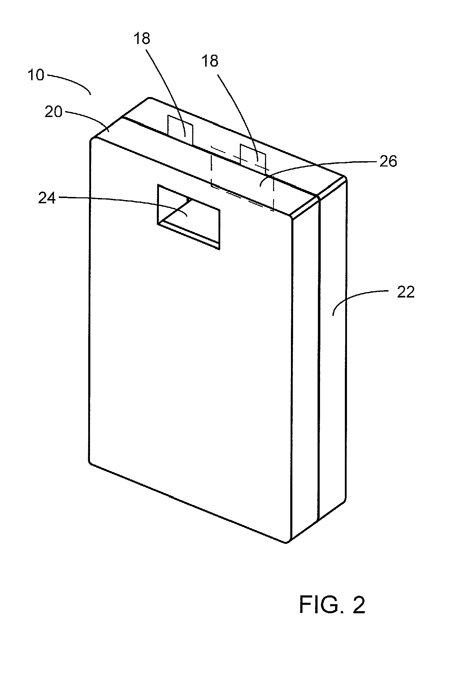

Fig. 2 depicts an assembled cell module 10. In the cell module 10 in Fig. 2, the first enclosure portion 20 and the second enclosure portion 22 have been brought together such that the first sealing surface 28 sealingly abuts the second sealing surface 30. The cell module 10 is sealed along the entire periphery defined by the sealing surfaces 28, 30 so that the only fluid communication between the interior of the cell module 10 and the exterior of the cell module 10 is by way of the first vent opening 24 and the second vent opening 26. The terminals 18 extend through the interface defined by the first sealing surface 28 and the second sealing surface 30 so as to provide electrical communication between the electrochemical cell package 12 and the exterior of the cell module 10. Sealing is additionally provided to prevent fluid communication between the interior of the cell module 10 and the exterior of the cell module 10 at the interface between the terminals 18 and the sealing surfaces 28, 30. Alternate means for providing electrical communication between the electrochemical cell package 12 and the exterior of the cell module 10 while preventing fluid communication between the interior of the cell module 10 and the exterior of the cell module 10 may be provided without departing from the intended scope of the present invention.

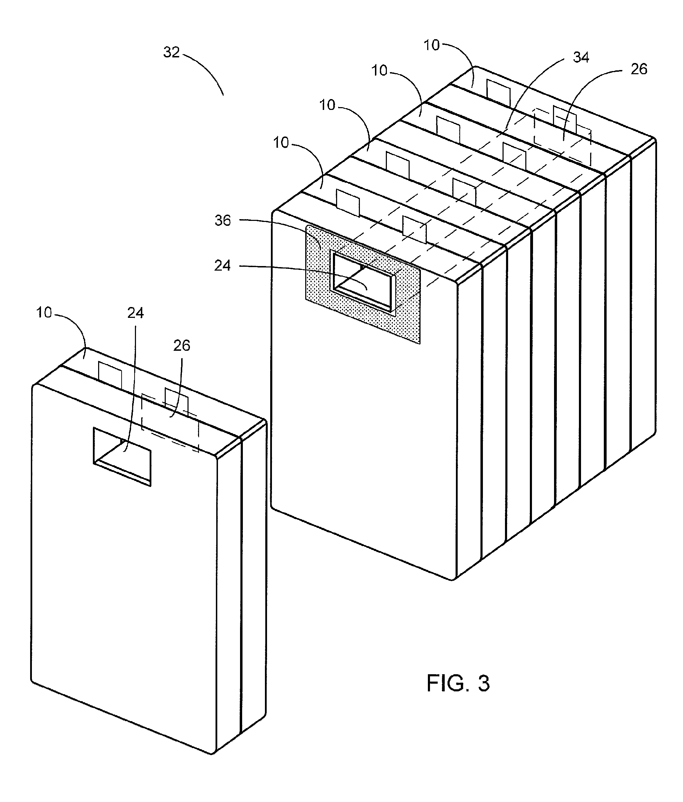

Referring to Fig. 3, a plurality of cell modules 10 is shown partially assembled into a multiple cell battery 32. The cell vent openings 24, 26 of adjacent cells are aligned to define a vent conduit 34 extending through the entire length of the multiple cell battery 32. The battery 32 may include a sealing means 36 to prevent gas vented from a cell package from escaping from the vent conduit 34 at an interface between cell modules 10. Such a sealing means 36 may include a face seal peripherally surrounding vent openings 24, 26. Other sealing means as are known in the art may alternatively be employed without departing from the intended scope of the present invention.

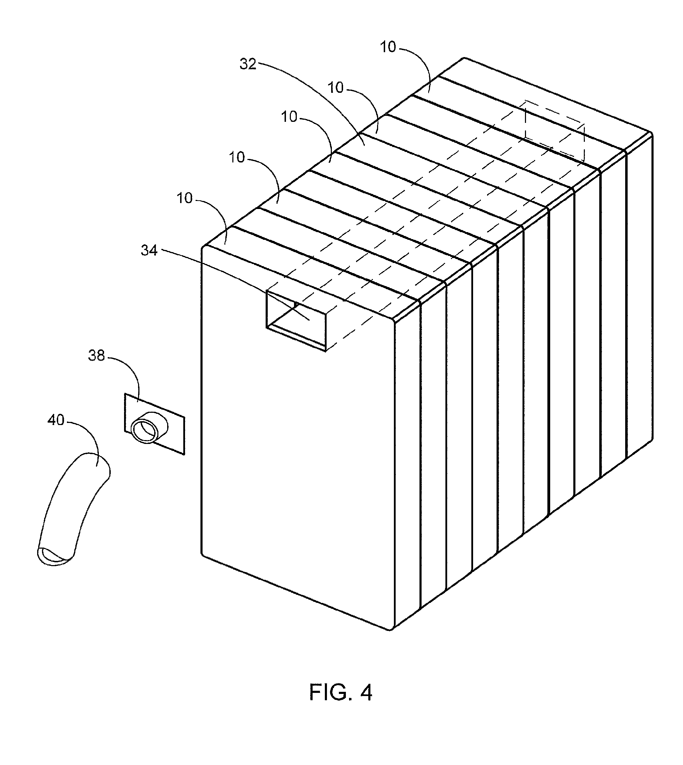

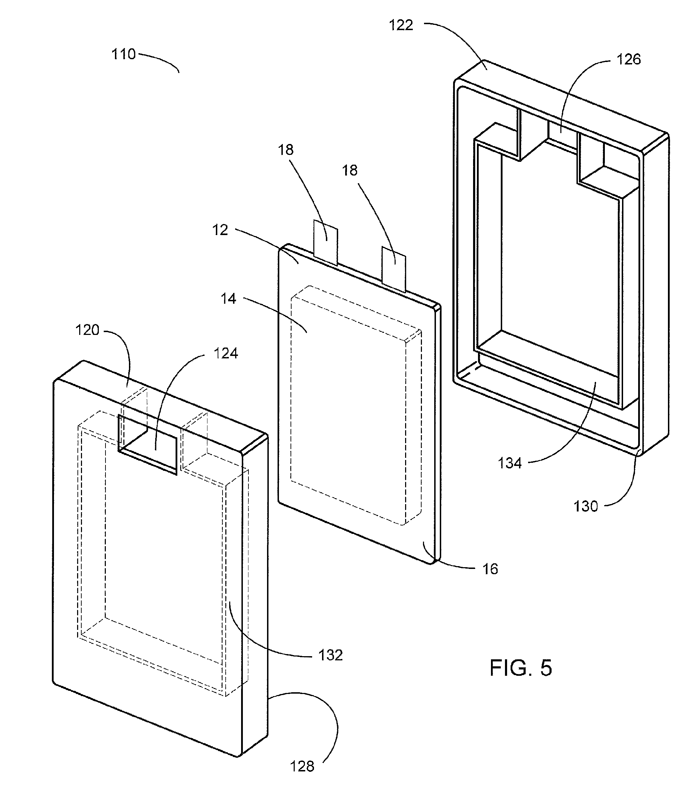

Fig. 4 depicts a battery pack 32 along with an interface means 38 to fluidly connect the vent conduit 34 with a gas conveyance means 40 such as a tube to route vent gases from the vent conduit 34 away from the battery pack 32. The gas conveyance means 40 is preferably fluidly coupled to the atmosphere at a location where vent gases can be safely discharged. For example, this invention enables a battery pack 32 to be mounted inside the passenger compartment of a vehicle without exposing the vehicle occupants to noxious gases in the event of a cell venting episode by routing vent gases through the gas conveyance means 40 to the exterior of the vehicle. Although depicted as a separate piece in Fig. 5, the interface means 38 may alternatively be a feature defined in a cell module 10 or a feature defined in an endplate disposed at an end of a stack of cell modules 10, without departing from the intended scope of the present invention.

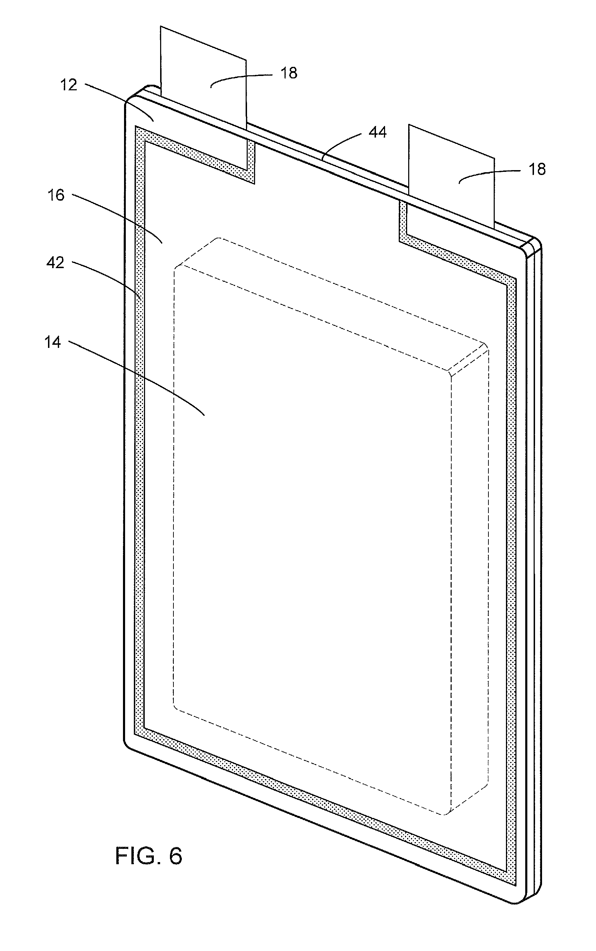

A further aspect of the invention is illustrated in Figs. 5 and 6. As depicted in Fig. 5, a cell module 110 comprises a first enclosure portion 120 and a second enclosure portion 122. In the depiction, the first enclosure portion 120 defines a first vent opening 124, and the second enclosure portion 122 defines a second vent opening 126. As depicted, the first enclosure portion 120 includes a first sealing surface 128, and the second enclosure portion 122 includes a second sealing surface 130. The first enclosure portion 120 further includes a first interior wall 132, and the second enclosure portion 122 includes a second interior wall 134. While Fig. 5 depicts the first sealing surface 128 and the second sealing surface 130 as planar surfaces, either of the sealing surfaces 128, 130 may define a recess into which a sealing means such as a gasket or a sealant material may be disposed. Alternately, the sealing surfaces 128, 130 may cooperate when abutted to one another to define a recess into which a sealing means such as a gasket or a sealant material may be disposed. The enclosure portions 120 and 122 may be structurally identical to each other, which may allow manufacturing efficiency.

The functions of the first interior wall 132 and the second interior wall 134 will now be described. Referring to Fig. 6, the electrochemical cell 14 is disposed between front and back layers of the metalized film 16, and the front and back layers of the metalized film 16 are sealed to each other in a region surrounding the electrochemical cell 14 as previously described. When assembled into a cell module 110, the first interior wall 132 and the second interior wall 134 in proximity to the cell package 12 cooperate to impart localized pressure on the metalized film 16 to define a reinforcement region 42 outside of the extent of electrochemical cell 14. The reinforcement region 42 represents a region in which pressure generated by gases which may be produced by electrochemical cell 14 is impeded from applying stress to the seal between the layers of the metalized film 16. The reinforcement region 42 does not impede the application of pressure-generated stress to the entire seal region between the layers of the metalized film 16, but rather the first internal wall 132 and the second internal wall 134 are disposed such that an unreinforced region 44 is defined in a predetermined location of the cell package 12. In the event of the electrochemical cell 14 producing gas, the pressure between the layers of metalized film 16 may increase until the strength of the seal in the unreinforced region 44 is exceeded, at which time the layers of the metalized film 16 will separate in the unreinforced region 44, resulting in the release of vent gas at a controlled location in the cell package 12.

While this invention has been described in terms of the embodiments thereof, it is not intended to be so limited, but rather only to the extent set forth in the claims that follow.

## Claims

1. A cell module (10; 110) comprising an electrochemical cell (14) in a cell package (12) disposed within an enclosure (20, 22; 120, 122), said enclosure (20, 22; 120, 122) having means (28, 30; 128, 130) to substantially prevent gas vented from the cell package (12) from escaping to the exterior of the enclosure (20, 22; 120, 122) except through a venting means (24, 26; 124, 126) defined in the enclosure (20, 22; 120, 122).

2. A cell module according to claim 1 further comprising means (132, 134) for defining where venting in the cell package (12) will occur in the event of pressure within the cell package exceeding the burst strength of the cell package.

3. A cell module according to claim 2 wherein the means (132, 134) for defining where venting in the cell package (12) will occur comprises means for reinforcing a region (42) of the cell package (12) that does not encompass the entire cell package (12), so as to define an unreinforced region (44) wherein venting in the cell package (12) will occur.

4. A multiple cell battery (32) comprising a plurality of cell modules (10; 110) according to any of the preceding claims.

5. A multiple cell battery (32) according to claim 4, further including sealing means (36) to substantially prevent gas vented from at least one cell package (12) from escaping to the exterior of the battery (32) at an interface between adjacent enclosures (20, 22; 120, 122).

6. A multiple cell battery (32) according to claim 4 or 5 wherein the venting means (24, 26; 124, 126) of a plurality of enclosures (20, 22; 120, 122) cooperate to define a vent conduit (34) in fluid communication with each cell package (12) in the battery (32).

7. A multiple cell battery (32) according to claim 6 further comprising an interface means (38) to fluidly connect the vent conduit (34) to a gas conveyance means (40), said gas conveyance means (40) disposed to fluidly connect the vent conduit (34) to the atmosphere at a predetermined location.

8. A multiple cell battery (32) according to any of claims 4 to 7 wherein the enclosures (20, 22; 120, 122) are stackable such that the venting means (24, 26; 124, 126) defined in an enclosure (20, 22; 120, 122) is substantially aligned with the venting means (24, 26; 124, 126) defined in an adjacently stacked enclosure (20, 22; 120, 122).

9. A multiple cell battery (32) according to any of claims 4 to 8 wherein the enclosure (20, 22; 120, 122) defines a vent opening (24, 26; 124, 126) forming the venting means and a chamber in fluid communication with the vent opening (24, 26; 124, 126).

10. A multiple cell battery (32) according to claim 9 wherein the electrochemical cell (14) is disposed in the chamber defined in the enclosure (20, 22; 120, 122).

11. A multiple cell battery (32) according to any of claims 4 to 10 wherein the electrochemical cell (14) is a lithium cell.

12. A multiple cell battery (32) according to any of claims 4 to 11 wherein the electrochemical cell (14) is encapsulated by a flexible film package (16).

13. A multiple cell battery (32) according to claim 12 in combination with claim 10 wherein the chamber is defined in part by a wall (132, 134) disposed on a surface of the enclosure (20, 22; 120, 122), said wall (132, 134) disposed so as to impede pressure generated by gas generated by the electrochemical cell (14) from applying pressure to a portion (42) of the periphery of the flexible film package (16).
